# FASCICULE DE BREVET EUROPEEN

(11) **EP 0 687 230 B1**
(45) Date de publication et mention de la délivrance du brevet: **11.09.1996**
(21) Numéro de dépôt: 94907584.0
(22) Date de dépôt: 17.02.1994
(51) Int. Cl.: B60T 11/21

(54) **SYSTEME DE FREINAGE A TROIS CIRCUITS HYDRAULIQUES INDEPENDANTS**
BREMSSYSTEM MIT DREI UNABHÄNGIGEN HYDRAULISCHEN KREISEN
BRAKING SYSTEM WITH THREE SEPARATE HYDRAULIC CIRCUITS

(30) Priorité: 10.03.1993 FR 9302742
(43) Date de publication de la demande: 20.12.1995
(73) Titulaire: ALLIEDSIGNAL EUROPE SERVICES TECHNIQUES, 93700 Drancy (FR)
(72) Inventeur: CASTEL, Philippe, F-75005 Paris (FR)
(74) Mandataire: Bentz, Jean-Paul
(86) Numéro de dépôt international: FR9400173
(87) Numéro de publication internationale: WO9420346

(56) Documents cités:
- DE-A- 2 213 944
- DE-A- 2 415 133
- FR-A- 2 535 270

## Description

La présente invention concerne un système de freinage d'un véhicule à moteur, incluant un maître-cylindre destiné à constituer une source de haute pression pour un fluide hydraulique dont il est rempli en vue d'alimenter des moteurs de frein, ce maître-cylindre comprenant des première et seconde chambres de pression disposées parallèlement l'une à l'autre et dotées de première et seconde sorties de pression respectives voisines l'une de l'autre, ces chambres étant essentiellement délimitées, dans des cylindres respectifs, par des pistons respectifs destinés à y coulisser simultanément, suivant une première direction orientée vers les première et seconde sorties, pour faire apparaître sur ces sorties des pressions croissant de façon simultanée.

De tels systèmes de freinage sont utilisés dans l'art antérieur, les maîtres-cylindres du type mentionné étant connus sous la dénomination spécifique de "maîtres-cylindres parallèles".

Plus généralement, les circuits multiples de freinage sont connus depuis longtemps et appréciés pour les garanties qu'ils offrent en matière de sécurité, comparés aux circuits de freinage simples, que toute perte de fluide hydraulique peut rendre totalement inopérants.

Parmi les circuits multiples connus, les plus utilisés sont les systèmes dits en "X" et "avant-arrière", les premiers étant formés de deux sous-circuits dont chacun assure le freinage sur une diagonale du véhicule, et les seconds étant formés de deux sous-circuits dont l'un assure le freinage sur l'essieu avant et l'autre sur l'essieu arrière.

Dans la mesure où le choix de l'un ou de l'autre de ces systèmes connus résulte évidemment de compromis divers, notamment économiques, chacun de ces systèmes présente des avantages et des inconvénients spécifiques.

En particulier, comme l'effort de freinage d'un véhicule est beaucoup plus important à l'avant qu'à l'arrière, la défaillance du sous-circuit avant d'un système de freinage en "avant-arrière" altère davantage les qualités de freinage du véhicule que la défaillance de l'un des sous-circuits d'un système en "X".

En revanche, la stabilité du véhicule est moins compromise dans le premier cas, et un système en "avant-arrière" présente l'avantage supplémentaire de ne requérir qu'un seul dispositif de répartition des pressions de freinage entre l'avant et l'arrière.

On connaît, par le document DE-A-2 415 133, un maître-cylindre à trois chambres parallèles, susceptible d'être associé à un circuit de freinage hybride présentant les avantages cumulés des circuits en "X" et "avant-arrière".

Ce maître-cylindre connu présente cependant l'inconvénient de requérir quatre pistons, de présenter dès son entrée un diamètre important interdisant pratiquement de l'associer à un servomoteur pneumatique d'assistance, et de présenter une complexité structurelle et un poids élevés.

La présente invention se situe dans ce contexte, et se propose de perfectionner les systèmes de freinage existants par le biais d'un nouveau type de maître-cylindre susceptible d'être réalisé à un coût relativement bas.

A cette fin, le système de freinage de l'invention est essentiellement caractérisé en ce que le maître-cylindre qu'il incorpore comprend une troisième chambre essentiellement constituée d'un troisième cylindre parallèle aux deux premiers et les prolongeant suivant une seconde direction inverse de la première, cette troisième chambre comprenant une troisième sortie de pression reliée à au moins un moteur de frein, un troisième piston susceptible de coulisser suivant la première direction, sous l'effet d'une force d'entrée, pour faire croître la pression sur cette troisième sortie, et des moyens pour transmettre aux premier et second pistons une partie au moins de la force d'entrée, ces moyens de transmission de force comprenant au moins une communication reliant la troisième chambre aux premier et second cylindres et permettant au fluide présent dans la troisième chambre d'agir hydrauliquement sur les premier et second pistons en les poussant dans la première direction.

Pour augmenter la sécurité de fonctionnement du maître-cylindre, les moyens de transmission de force comprennent de préférence aussi un palonnier présentant une base et deux branches à la manière d'un U ou d'un V, ce palonnier étant en appui sur les premier et second pistons par des extrémités respectives de ses branches, et étant susceptible d'être poussé par le troisième piston qui vient directement en contact avec sa base, au moins en cas de manque de fluide dans la troisième chambre.

Les trois chambres sont par exemple formées dans un même corps, et un ressort travaillant en compression est disposé entre le palonnier et le troisième piston.

Dans un système de freinage qui comprend deux moteurs de frein avant et deux moteurs de frein arrière, et qui utilise un tel maître-cylindre, la sortie de la première chambre est de préférence reliée au premier moteur de frein avant, tandis que la sortie de la seconde chambre est reliée au second moteur de frein avant, et que la sortie de la troisième chambre est simultanément reliée à chacun des deux moteurs de frein arrière.

D'autre caractéristiques et avantages de l'invention ressortiront clairement de la description qui en est faite ci-après, à titre indicatif et nullement limitatif, en référence aux dessins annexés, dans lesquels :

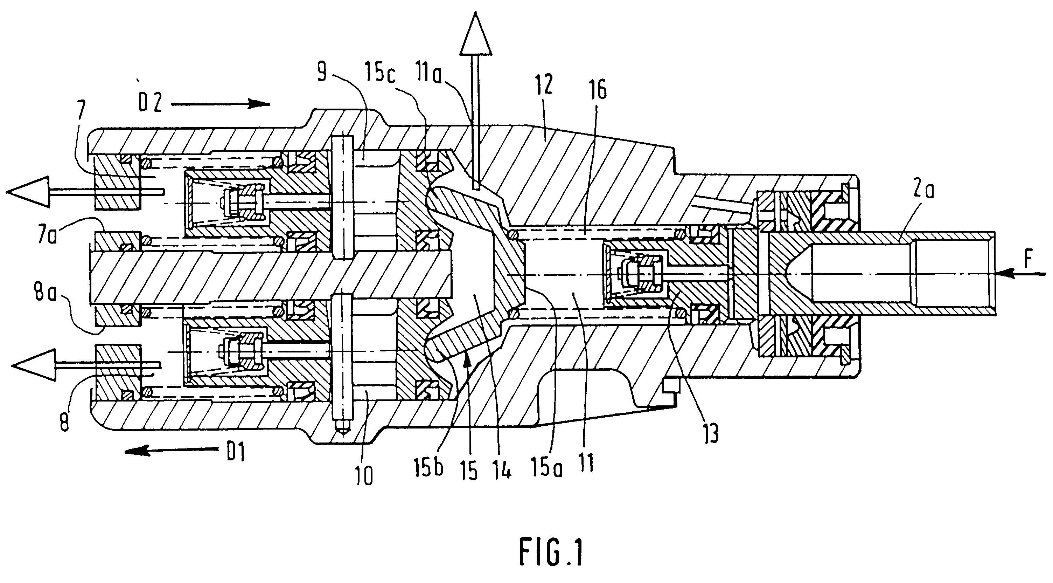

- La figure 1 est une vue en coupe d'un maître-cylindre équipant un système de freinage conforme à l'invention ; et
- La figure 2 est un schéma de connexion de ce maître-cylindre dans un tel système.

Le système de freinage de l'invention inclut un maître-cylindre 1 actionné au moyen d'une pédale 2 par l'intermédiaire d'une tige 2a, et destiné à constituer une source de haute pression pour un fluide hydraulique dont il est rempli, en vue d'alimenter des moteurs de frein avant 3, 4 et arrière 5, 6 d'un véhicule à moteur.

Ce maître-cylindre comprend des première et seconde chambres de pression 7, 8 disposées parallèlement l'une à l'autre et dotées de première et seconde sorties de pression respectives 7a, 8a, voisines l'une de l'autre.

Ces chambres sont essentiellement délimitées, dans des cylindres respectifs, par des pistons respectifs 9, 10, destinés à y coulisser simultanément, suivant une première direction D1 orientée vers les première et seconde sorties 7a, 8a, pour faire apparaître sur ces sorties des pressions croissant de façon simultanée.

Ce maître-cylindre comprend en outre une troisième chambre 11, essentiellement constituée d'un troisième cylindre parallèle aux deux premiers, les prolongeant suivant une seconde direction D2, inverse de la première, et formé dans un même corps 12 que les cylindres servant à définir les deux premières chambres 7, 8.

La troisième chambre 11 comprend une troisième sortie de pression 11a, un troisième piston 13 est susceptible de coulisser suivant la première direction D1, sous l'effet d'une force d'entrée F appliquée sur la tige 2a, pour faire croître la pression sur cette troisième sortie 11a, et des moyens sont prévus pour transmettre aux premier et second pistons 9, 10 une partie au moins de la force d'entrée F.

Ces moyens de transmission de force comprennent de préférence des moyens hydrauliques et des moyens mécaniques et, plus précisément, un passage 14 mettant la troisième chambre en communication avec les deux premiers cylindres pour permettre au fluide présent dans cette troisième chambre d'agir hydrauliquement sur les premier et second pistons en les poussant dans la première direction D1, ainsi qu'un palonnier 15 présentant une base 15a et deux branches 15b, 15c, à la manière d'un U ou d'un V.

Ce palonnier, qui agit mécaniquement, est en appui sur les premier et second pistons 9, 10 par les extrémités respectives de ses branches, et est susceptible d'être poussé par le troisième piston 13 qui vient directement en contact avec sa base 15a et la pousse dans la première direction D1 lorsque le fluide hydraulique vient acidentellement à manquer dans la troisième chambre par suite d'une fuite dans le système de frein, ce palonnier actionnant alors à son tour les premier et second pistons.

La base du palonnier est par exemple conformée de manière à recevoir un ressort 16 travaillant en compression et disposé entre ce palonnier et le troisième piston 13.

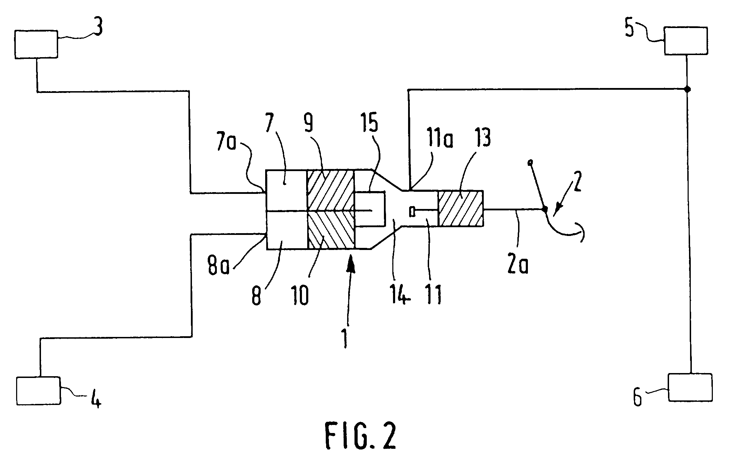

Comme le montre la figure 2, la sortie 7a de la première chambre peut être reliée au premier moteur de frein avant 3, la sortie 8a de la seconde chambre peut être reliée au second moteur de frein avant 4, et la sortie 11a de la troisième chambre peut être simultanément reliée à chacun des deux moteurs de frein arrière 5 et 6.

Grâce à un tel arrangement, de réalisation relativement simple, les conséquences négatives d'une défaillance sur l'un quelconque des circuits hydrauliques de freinage avant gauche, avant droit ou arrière restent très limitées.

En particulier, une défaillance de l'un quelconque des circuits avant n'altère que très peu la capacité de freinage et la stabilité du véhicule, dans la mesure notamment où le freinage reste encore assuré symétriquement sur les deux roues arrière, et sur une roue avant.

Par ailleurs, une défaillance sur le circuit arrière, bien que concernant deux roues, reste bénigne puisque le freinage est toujours assuré sur le train avant, sur lequel s'appliquent toujours les plus grands efforts, et la stabilité du véhicule profite de la totale symétrie des efforts de freinage résiduels.

## Revendications

1. Système de freinage d'un véhicule à moteur, incluant un maître-cylindre (1) destiné à constituer une source de haute pression pour un fluide hydraulique dont il est rempli en vue d'alimenter des moteurs de frein (3, 4, 5, 6), ce maître-cylindre comprenant des première et seconde chambres de pression (7, 8) disposées parallèlement l'une à l'autre et dotées de première et seconde sorties de pression respectives voisines l'une de l'autre (7a, 8a), ces chambres étant essentiellement délimitées, dans des cylindres respectifs, par des pistons respectifs (9, 10) destinés à y coulisser simultanément, suivant une première direction (D1) orientée vers les première et seconde sorties, pour faire apparaître sur ces sorties des pressions croissant de façon simultanée, caractérisé en ce que ce maître-cylindre comprend en outre une troisième chambre (11) essentiellement constituée d'un troisième cylindre parallèle aux deux premiers et les prolongeant suivant une seconde direction (D2) inverse de la première, cette troisième chambre comprenant une troisième sortie de pression (11a) reliée à au moins un moteur de frein (5, 6), un troisième piston (13) susceptible de coulisser suivant la première direction (D1), sous l'effet d'une force d'entrée (F), pour faire croître la pression sur cette troisième sortie, et des moyens (14, 15) pour transmettre aux premier et second pistons une partie au moins de la force d'entrée, ces moyens de transmission de force comprenant au moins une communication (14) reliant la troisième chambre aux premier et second cylindres et permettant au fluide présent dans la troisième chambre d'agir hydrauliquement sur les premier et second pistons en les poussant dans la première direction.

2. Système de freinage suivant la revendication 1, caractérisé en ce que les moyens de transmission de force comprennent un palonnier (15) présentant une base (15a) et deux branches (15b, 15c) à la manière d'un U ou d'un V, ce palonnier étant en appui sur les premier et second pistons par des extrémités respectives de ses branches, et étant susceptible d'être poussé par le troisième piston (13) qui vient directement en contact avec sa base, au moins en cas de manque de fluide dans la troisième chambre.

3. Système de freinage suivant la revendication 2, caractérisé en ce qu'un ressort (16) travaillant en compression est disposé entre le palonnier et le troisième piston.

4. Système de freinage suivant l'une quelconque des revendications précédentes, caractérisé en ce que les trois chambres sont formées dans un même corps (12).

5. Système de freinage suivant l'une quelconque des revendications précédentes, comprenant deux moteurs de frein avant et deux moteurs de frein arrière, caractérisé en ce que la sortie de la première chambre (7) est reliée au premier moteur de frein avant (3), en ce que la sortie de la seconde chambre (8) est reliée au second moteur de frein avant (4), et en ce que la sortie de la troisième chambre (11) est simultanément reliée à chacun des deux moteurs de frein arrière (5, 6).

## Claims

1. Braking system of a motor vehicle, including a master cylinder (1) intended to constitute a highpressure source for a hydraulic fluid with which it is filled for the purpose of supplying brake motors (3, 4, 5, 6), this master cylinder comprising first and second pressure chambers (7, 8) located parallel to each other and provided with first and second respective pressure outlets (7a, 8a) adjacent to one another, these chambers being essentially defined, in respective cylinders, by respective pistons (9, 10) intended to slide simultaneously therein, in a first direction (D1) pointing towards the first and second outlets, to make pressures which increase simultaneously appear on these outlets, characterized in that this master cylinder further comprises a third chamber (11) essentially made up of a third cylinder parallel to the first two and extending them in a second direction (D2) opposite the first one, this third chamber comprising a third pressure outlet (11a), connected to at least one brake motor (5, 6), a third piston (13) capable of sliding in the first direction (D1), under the effect of an input force (F), in order to make the pressure on this third outlet increase, and means (14, 15) for transmitting at least part of the input force to the first and second pistons, these force-transmission means comprising at least one communication (14) connecting the third chamber to the first and second cylinders and, allowing the fluid present in the third chamber to act hydraulically on the first and second pistons by pushing them in the first direction.

2. Braking system according to Claim 1, characterized in that the force-transmission means comprise a balance arm (15) having a base (15a) and two branches (15nb, 15c) like a U or a V, this balance arm bearing on the first and second pistons via respective ends of its branches, and being capable of being pushed by the third piston (13) which comes directly into contact with its base, at least in the event of a lack of fluid in the third chamber.

3. Braking system according to Claim 2, characterized in that a spring (16) working in compression is located between the balance arm and the third piston.

4. Braking system according to any one of the preceding claims, characterized in that the three chambers are formed in one same body (12).

5. Braking system according to any one of the preceding claims, comprising two front brake motors and two rear brake motors, characterized in that the output of the first chamber (7) is connected to the first front brake motor (3), in that the outlet of the second chamber (8) is connected to the second front brake motor (4), and in that the outlet of the third chamber (11) is simultaneously connected to each of the rear brake motors (5, 6).

## Patentansprüche

1. Bremssystem für ein Kraftfahrzeug, mit einem Hauptzylinder (1), der dafür vorgesehen ist, eine Hochdruckquelle für ein Hydraulikfluid, mit dem er gefüllt ist, zu bilden, um Bremsbetätigungsvorrichtungen (3, 4, 5, 6) zu versorgen, wobei dieser Hauptzylinder eine erste und eine zweite Druckkammer (7, 8) aufweist, die parallel zueinander angeordnet sind und mit einem ersten bzw. einem zweiten Druckausgang (7a, 8a) versehen sind, die einander benachbart sind, wobei diese Kammern im wesentlichen in entsprechenden Zylindern von entsprechenden Kolben (9, 10) begrenzt sind, die dafür vorgesehen sind, in diesen entlang einer ersten Richtung (D1), die zu dem ersten und zu dem zweiten Ausgang gerichtet ist, zu gleiten, um an diesen Ausgängen gleichzeitig anwachsende Drücke auszubilden, dadurch gekennzeichnet, daß der Hauptzylinder außerdem eine dritte Kammer (11) aufweist, die im wesentlichen durch einen dritten Zylinder gebildet ist, der parallel zu den beiden ersten ist und diese entlang einer zweiten Richtung (D2) verlängert ist, die zur ersten entgegengesetzt ist, wobei diese dritte Kammer einen dritten Druckausgang (11a) aufweist, der mit wenigstens einer Bremsbetätigungsvorrichtung (5, 6) verbunden ist, sowie einen dritten Kolben (13), der unter der Wirkung einer Eingangskraft (F) entlang der ersten Richtung (D1) gleiten kann, um den Druck an diesem dritten Ausgang ansteigen zu lassen, und Mittel (14, 15) zum Übertragen wenigstens eines Teils der Eingangskraft auf den ersten und den zweiten Kolben, wobei diese Kraftübertragungsmittel wenigstens eine Verbindung (14) aufweisen, welche die dritte Kammer mit dem ersten und dem zweiten Zylinder verbindet und dem in der dritten Kammer vorhandenen Fluid ermöglicht, hydraulisch auf den ersten und den zweiten Kolben einzuwirken und diese in der ersten Richtung zu schieben.

2. Bremssystem nach Anspruch 1, dadurch gekennzeichnet, daß die Kraftübertragungsmittel eine Ausgleichsgabel (15) enthalten, die eine Basis (15a) und zwei Schenkel (15b, 15c) nach Art eines U oder V aufweist, wobei diese Ausgleichsgabel an dem ersten und dem zweiten Kolben mittels der entsprechenden Enden ihrer Schenkel anliegt und von dem dritten Kolben (13) geschoben werden kann, der wenigstens für den Fall, daß in der dritten Kammer kein Fluid vorliegt, direkt mit deren Basis in Berührung gelangt.

3. Bremssystem nach Anspruch 2, dadurch gekennzeichnet, daß zwischen der Ausgleichsgabel und dem dritten Kolben eine Druckfeder (16) angeordnet ist.

4. Bremssystem nach einem der vorhergehenden Ansprüche, dadurch gekennzeichnet, daß die drei Kammern in demselben Körper (12) gebildet sind.

5. Bremssystem nach einem der vorhergehenden Ansprüche, mit zwei vorderen Bremsbetätigungsvorrichtungen und zwei hinteren Bremsbetätigungsvorrichtungen, dadurch gekennzeichnet, daß der Ausgang der ersten Kammer (7) mit der ersten vorderen Bremsbetätigungsvorrichtung (3) verbunden ist, daß der Ausgang der zweiten Kammer (8) mit der zweiten vorderen Bremsbetätigungsvorrichtung (4) verbunden ist und daß der Ausgang der dritten Kammer (11) gleichzeitig mit den beiden hinteren Bremsbetätigungsvorrichtungen (5, 6) verbunden ist.
